Europäisches Patentamt

European Patent Office

Office européen des brevets

(11) Veröffentlichungsnummer: **0 495 139 A1**

# EUROPÄISCHE PATENTANMELDUNG

(21) Anmeldenummer: **91100417.4**

(22) Anmeldetag: **15.01.91**

(51) Int. Cl.⁵: **G01T 1/29**

(43) Veröffentlichungstag der Anmeldung:
**22.07.92 Patentblatt 92/30**

(84) Benannte Vertragsstaaten:
**DE FR IT**

(71) Anmelder: **SIEMENS AKTIENGESELLSCHAFT**
**Wittelsbacherplatz 2**
**W-8000 München 2(DE)**

(72) Erfinder: **Lange, Gottfried, Dipl.-Phys.**
**Dresdner Strasse 38a**
**W-8520 Erlangen(DE)**
Erfinder: **Reinfelder, Hans-Erich, Dr.-Ing.**
**Marktplatz 4**
**W-8520 Erlangen(DE)**

(54) **Röntgendiagnostikeinrichtung mit einem Speicherleuchtschirm.**

(57) Die Erfindung betrifft eine Röntgendiagnostikeinrichtung mit einem Speicherleuchtschirm (4) für die
latente Speicherung des jeweiligen Röntgenstrahlenbildes, der einen Träger (15) und eine Leuchtstoffschicht aufweist, mit einer Röntgenaufnahmevorrichtung (1, 2) zur Erzeugung des Röntgenstrahlenbildes
auf dem Speicherleuchtschirm (4), mit einer Auslesevorrichtung (5 bis 12), bei der zur Bildwiedergabe
der Speicherleuchtschirm (4) durch eine flächenförmige Abtastung mittels eines Abtaststrahles (7) einer
Strahlenquelle (5) bildpunktweise zum Leuchten angeregt wird, mit einer Detektorvorrichtung (8, 9) zum
Erfassen des von der Leuchtstoffschicht des Speicherleuchtschirmes (4) emittierten Lichtes und mit
einem Bildwiedergabesystem. Die Leuchtstoffschicht
(4) ist an flächenförmigen Filtermitteln (15) angebracht.

EP 0 495 139 A1

Die Erfindung betrifft eine Röntgendiagnostikeinrichtung mit einem Speicherleuchtschirm für die latente Speicherung des jeweiligen Röntgenstrahlenbildes, der einen Träger und eine Leuchtstoffschicht aufweist, mit einer Röntgenaufnahmevorrichtung zur Erzeugung des Röntgenstrahlenbildes auf dem Speicherleuchtschirm, mit einer Auslesevorrichtung, bei der zur Bildwiedergabe der Speicherleuchtschirm durch eine flächenförmige Abtastung mittels eines Abtaststrahles einer Strahlenquelle bildpunktweise zum Leuchten angeregt wird, mit einer Detektorvorrichtung zum Erfassen des von dem Speicherleuchtschirm emittierten Lichtes und mit einem Bildwiedergabesystem.

In der EP-A-0 387 369 ist eine derartige Röntgendiagnostikeinrichtung beschrieben, bei der der Speicherleuchtschirm in einer Aufnahmestation mit Röntgenstrahlen bestrahlt wird, so daß in ihm Defektelektronen erzeugt werden, die in Potentialfallen (Traps) gespeichert werden. Anschließend wird der belichtete Speicherleuchtschirm in eine Auslesestation befördert, in der eine Auslesevorrichtung die gesamte Fläche dieses Speicherleuchtschirmes mit einer zusätzlichen Strahlenquelle, beispielsweise einem Laser, bildpunktweise abtastet, so daß die in den Traps gespeicherten Elektronen angeregt werden und in Rekombinationszentren zurückfallen können, wobei die Energiedifferenz in Form von Lichtquanten mit einer gegenüber der Wellenlänge der Strahlenquelle anderen Wellenlänge abgestrahlt wird. Durch einen Detektor wird das derart emittierte Licht erfaßt, so daß das gespeicherte Röntgenstrahlenbild aus dem Speicherleuchtschirm ausgelesen wird. Dieses Bild wird dann in bekannter Weise einem Bildwiedergabesystem zugeführt, das die Bildwiedergabe entweder auf einem Monitor oder als Hardcopy bewirkt.

Zur flächenförmigen Abtastung des Speicherleuchtschirmes wird der Laserstrahl beispielsweise in horizontaler Richtung durch eine holographische Ablenkvorrichtung abgelenkt und in vertikaler Richtung verschoben, so daß alle auf dem Speicherleuchtschirm liegenden Bildpunkte nacheinander angeregt werden. Das von dem Speicherleuchtschirm emittierte Licht wird durch einen optischen Kollektor erfaßt und auf der lichtempfindlichen Eingangsfläche eines Detektors oder mehrerer Detektoren abgebildet. Das Ausgangssignal des Detektors wird beispielsweise einer normalen Fernsehkette zur Wiedergabe des Röntgenbildes auf einem Monitor zugeführt.

Als Speicherleuchtstoffe können hierbei die aus der DE-C-3 347 207 bekannten, mit Europium aktivierten Bariumfluor-Bromchlorid-Verbindungen Verwendung finden, die sich durch sichtbares Licht (Photostimulation) anregen lassen. Zur Anregung dieses Speicherleuchtstoffes läßt sich der üblicherweise verwendete He-Ne-Laser verwenden, der gebündelte Strahlen einer Wellenlänge von 633 nm erzeugt.

Dabei ist der Speicherleuchtschirm auch an einer Transportvorrichtung befestigt. Ist die Transportvorrichtung aus einem die Röntgenstrahlen nicht schwächendem Material erstellt, so kann der Speicherleuchtschirm unterhalb dieser befestigt sein. Besteht dagegen die Transportvorrichtung nur aus einem Rahmen, der die Aufnahmefläche sowohl nach oben, zur Röntgenröhre hin, als auch nach unten, zur Abtastvorrichtung hin, freigibt, so kann sie auch aus Metall sein.

Derartige Röntgendiagnostikeinrichtungen weisen aber den Nachteil auf, daß eine spezielle Transportvorrichtung vorgesehen sein muß, die entweder stabil ist und die Röntgenstrahlen nicht schwächt oder nur aus einem Rahmen bestehen darf, wobei sie dann zumindest in der Mitte, dem wichtigsten Aufnahmeort, nicht stabil genug ist, um scharfe Aufnahmen erzielen zu können.

Die Erfindung geht von der Aufgabe aus, eine Röntgendiagnostikeinrichtung der eingangs genannten Art zu schaffen, die einfach und stabil aufgebaut ist und bei der die Transportvorrichtung nur aus wenigen Teilen besteht.

Die Aufgabe wird erfindungsgemäß dadurch gelöst, daß die Leuchtstoffschicht an flächenförmigen Filtermitteln angebracht ist. Dadurch wird erreicht, daß die Leuchtstoffschicht und Filtermittel eine Einheit bilden und dadurch versteift werden.

Bei einer Röntgendiagnostikeinrichtung mit einer Transportvorrichtung für den Speicherleuchtschirm hat es sich als vorteilhaft erwiesen, wenn die Filtermittel den Träger für die Transportvorrichtung bilden, wobei die Leuchtstoffschicht in Strahlenrichtung gesehen hinter den Filtermitteln angeordnet ist. Die Filtermittel können dabei aus einem Sekundärstrahlenfilter, beispielsweise einem Streustrahlenraster, bestehen. Erfindungsgemäß kann die Leuchtstoffschicht auf die Filtermittel direkt aufgetragen sein. Es kann aber auch der Speicherleuchtschirm auf die Filtermittel geklebt sein. Eine Schicht kann eingespart werden, wenn die Filtermittel den Träger für die Leuchtstoffschicht bilden.

Die Erfindung ist nachfolgend anhand eines in der Zeichnung dargestellten Ausführungsbeispieles näher erläutert. Es zeigen:

FIG 1        den schematischen Aufbau einer bekannten Röntgendiagnostikeinrichtung,

FIG 2        den Wiedergabeteil der Röntgendiagnostikeinrichtung gemäß FIG 1 mit der erfindungsgemäßen Transportvorrichtung und

FIG 3 und 4        erfindungsgemäße Ausführungen des Schichtaufbaues der in FIG 2 dargestellten Transportvorrichtung.

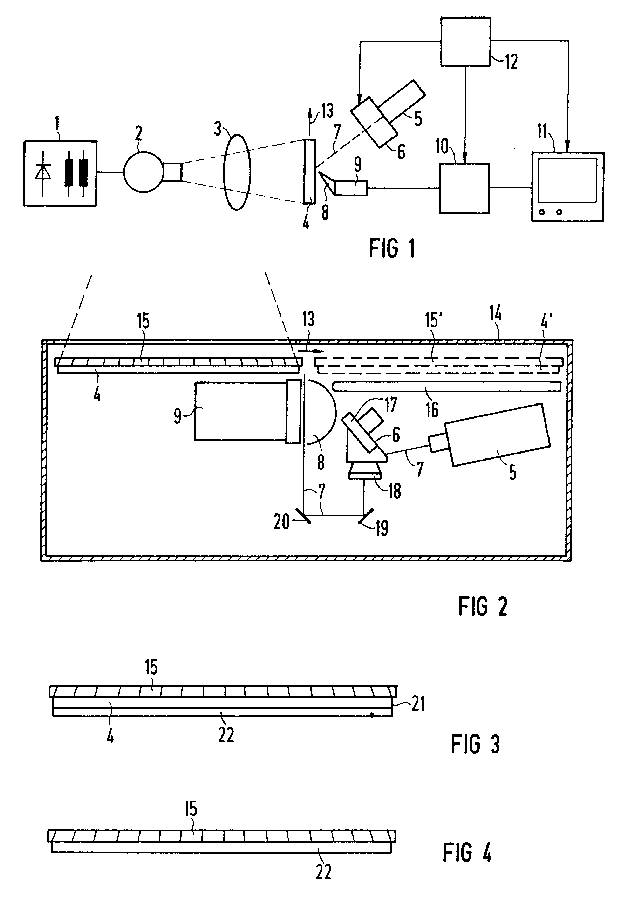

In der FIG 1 ist ein Hochspannungsgenerator 1 dargestellt, der eine Röntgenröhre 2 speist, die Röntgenstrahlen aussendet, die einen Patienten 3 durchdringen. Die durch den Patienten 3 entsprechend seiner Transparenz geschwächten Röntgenstrahlen fallen auf einen Lumineszenz-Speicherleuchtschirm 4. Dieses auffallende Strahlenbild erzeugt in dem Speicherleuchtschirm 4, wie bereits beschrieben, Defektelektronen, die in Traps des Speicherleuchtstoffes gespeichert werden, so daß in dem Speicherleuchtschirm 4 nach der Bestrahlung ein latentes Bild gespeichert ist.

Zur Wiedergabe des latenten, gespeicherten Bildes wird üblicherweise der Speicherleuchtschirm 4 durch eine Strahlenquelle, beispielsweise durch einen Laser 5, angeregt. Dem Laser 5 ist eine Ablenkvorrichtung 6 vorgeschaltet, die den Abtaststrahl 7 zeilenweise über den Speicherleuchtschirm 4 ablenkt. Die Ablenkvorrichtung 6 für den Abtaststrahl 7 kann beispielsweise aus einem elektrooptischen Strahlenablenker für die horizontale Ablenkung bestehen. Die vertikale Ablenkung kann dadurch erfolgen, daß der Speicherleuchtschirm 4 in Richtung des Pfeiles 13 verschoben wird, so daß nacheinander die gesamte Fläche des Speicherleuchtschirmes 4 durch den Abtaststrahl 7 bildpunktweise abgetastet werden kann.

Ein Lichtleiter 8 erfaßt das von dem Speicherleuchtschirm 4 emittierte Licht und leitet es auf einen Detektor 9, der die Helligkeit der abgetasteten Bildpunkte erfaßt und in ein elektrisches Signal umwandelt, das einer Wiedergabeschaltung 10 zugeführt wird, die aus einzelnen analogen Ausgangssignalen des Detektors 9 ein Videosignal zur Darstellung auf einem Monitor 11 erzeugt. Eine Steuereinrichtung 12 bewirkt bei der Wiedergabe die Synchronisation der Ablenkvorrichtung 6, der Wiedergabeschaltung 10 und des Monitors 11. Die Wiedergabeschaltung 10 kann in bekannter Weise Bildspeicher, eine Verarbeitungsschaltung und Wandler aufweisen.

In FIG 2 ist eine derartige Aufnahmestation dargestellt, bei der an einem in einem Gehäuse 14 angeordneten, eine Transportvorrichtung bildenden Streustrahlenraster 15 der Speicherleuchtschirm 4 befestigt ist. In der dargestellten Stellung befindet sich das Streustrahlenraster 15 mit dem Speicherleuchtschirm 4 in der ersten Position, der Aufnahmeposition, in der der Speicherleuchtschirm 4 durch die Röntgenstrahlen bestrahlt wird. Nach erfolgter Bestrahlung verschiebt die Transportvorrichtung mit dem Streustrahlenraster 15 den Speicherleuchtschirm 4 in Richtung des Pfeiles 13. Dabei wird gleichzeitig der Speicherleuchtschirm 4 durch die unterhalb des Speicherleuchtschirmes 4 angeordnete Auslesevorrichtung 5 bis 9 abgetastet. Der vom Laser 5 erzeugte Abtaststrahl 7 wird einer holographischen Ablenkvorrichtung 17 als Ablenkvorrichtung 6 zugeführt, die ein Objektiv 18 aufweist, das den Abtaststrahl 7 auf dem Speicherleuchtschirm 4 fokussiert. Eine derartige holographische Ablenkvorrichtung 17 ist beispielsweise in dem Prospekt der Firma Holotec Ltd., Rochester, N.Y., mit Druckzeichen 8/84 ausführlich beschrieben. Damit eine ausreichende Ablenkung des Abtaststrahles 7 über die gesamte Breite des Speicherleuchtschirmes 4 auch bei geringen Abmessungen erfolgen kann, wird der Abtaststrahl 7 über Umlenkspiegel 19 und 20 mehrfach umgeleitet, so daß sich ein gefalteter Strahlengang ergibt. Der Abtaststrahl 7 fällt dabei zwischen einen Lichtleiter 8 und einen Detektor 9, der in der EP-A-0 363 522 ausführlich beschrieben ist. Es lassen sich aber auch die üblichen, aus Quarzglas, Plexiglas oder ähnlichem bestehenden Lichtleiter verwenden.

Ist der Abtastvorgang beendet, so hat die Transportvorrichtung 15 den Speicherleuchtschirm 4 soweit verschoben, daß er sich in der zweiten Position, in der er gestrichelt dargestellt ist (4', 15'), befindet. In dieser zweiten Position erfolgt nunmehr die Löschung durch eine Löschvorrichtung 16, die, wie dargestellt, unterhalb des Speicherleuchtschirmes 4' und der Transportvorrichtung mit dem Streustrahlenraster 15' angeordnet sein kann.

Diese gesamte Auslesevorrichtung ist in dem Gehäuse 14 untergebracht, das beispielsweise an einem fahrbaren Gestell befestigt sein kann. Dadurch ist es möglich, diese Aufnahmeeinheit bei Bedarf unter eine Patientenliege zu schieben, auf der sich der zu untersuchende Patient 3 befindet, so daß die gewünschten Aufnahmen erstellt werden können. Diese Aufnahmestation kann aber auch fest mit dem Patientenlagerungstisch gekoppelt oder auch an einem Stativ in ihrer Höhe verstellbar befestigt sein.

In der FIG 3 ist die Transportvorrichtung mit dem Streustrahlenraster 15 dargestellt, an dem der Speicherleuchtschirm 4 angeklebt ist. Der Speicherleuchtschirm 4 besteht dabei aus einer Trägerfolie 21 und der Leuchtstoffschicht 22.

Gemäß FIG 4 kann aber auch die Leuchtstoffschicht 22 direkt auf dem Streustrahlenraster 15 aufgetragen sein, so daß das Streustrahlenraster 15 zum einen den Träger für die Leuchtstoffschicht 22 und zum anderen den Träger für die Transportvorrichtung bildet.

Durch diese erfindungsgemäße Ausführung der Röntgendiagnostikeinrichtung erhält man eine einfache Transportvorrichtung für den Speicherleuchtschirm mit einem kompakten und stabilen Aufbau.

**Patentansprüche**

1. Röntgendiagnostikeinrichtung mit einem Speicherleuchtschirm (4) für die latente Speicherung des jeweiligen Röntgenstrahlenbildes, der einen Träger (15, 21) und eine Leuchtstoffschicht (22) aufweist, mit einer Röntgenaufnahmevorrichtung (1, 2) zur Erzeugung des Röntgenstrahlenbildes auf dem Speicherleuchtschirm (4), mit einer Auslesevorrichtung (5 bis 12), bei der zur Bildwiedergabe der Speicherleuchtschirm (4) durch eine flächenförmige Abtastung mittels eines Abtaststrahles (7) einer Strahlenquelle (5) bildpunktweise zum Leuchten angeregt wird, mit einer Detektorvorrichtung (8, 9) zum Erfassen des von der Leuchtstoffschicht des Speicherleuchtschirmes (4) emittierten Lichtes und mit einem Bildwiedergabesystem (10, 11), **dadurch gekennzeichnet,** daß die Leuchtstoffschicht (22) an flächenförmigen Filtermitteln (15) angebracht ist.

2. Röntgendiagnostikeinrichtung nach Anspruch 1 mit einer Transportvorrichtung (15) für den Speicherleuchtschirm (4), **dadurch gekennzeichnet,** daß die Filtermittel (15) den Träger für die Transportvorrichtung (15) bilden, wobei die Leuchtstoffschicht (22) in Strahlenrichtung gesehen hinter den Filtermitteln (15) angeordnet ist.

3. Röntgendiagnostikeinrichtung nach Anspruch 1 oder 2, **dadurch gekennnzeichnet,** daß die Filtermittel (15) aus einem Sekundärstrahlenfilter bestehen.

4. Röntgendiagnostikeinrichtung nach einem der Ansprüche 1 bis 3, **dadurch gekennzeichnet,** daß die Filtermittel aus einem Streustrahlenraster (15) bestehen.

5. Röntgendiagnostikeinrichtung nach einem der Ansprüche 1 bis 4, **dadurch gekennzeichnet,** daß die Leuchtstoffschicht (22) auf die Filtermittel (15) aufgetragen ist.

6. Röntgendiagnostikeinrichtung nach einem der Ansprüche 1 bis 4, **dadurch gekennzeichnet,** daß der Speicherleuchtschirm (4) auf die Filtermittel (15) geklebt ist.

7. Röntgendiagnostikeinrichtung nach einem der Ansprüche 1 bis 5, **dadurch gekennzeichnet,** daß die Filtermittel (15) den Träger für die Leuchtstoffschicht (22) bilden.

FIG 1

FIG 2

FIG 3

FIG 4

Europäisches
Patentamt

# EUROPÄISCHER RECHERCHENBERICHT

Nummer der Anmeldung

EP 91 10 0417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 346 947 (FUJI PHOTO FILM CO., LTD)<br>* Zusammenfassung; Figuren 1-10 *<br>--- | 1-7 | G 01 T 1/29 |
| Y | EP-A-0 233 497 (FUJI PHOTO FILM CO., LTD)<br>* Seite 3, Zeilen 23-27,43-46; Seite 6, Zeilen 1-22; Figuren 1-5 *<br>--- | 1-7 | |
| A | EP-A-0 346 722 (SIEMENS)<br>* Zusammenfassung; Spalte 3, Zeile 35 - Spalte 5, Zeile 4; Figuren *<br>----- | 1 | |

|  |  |
|---|---|
| | **RECHERCHIERTE SACHGEBIETE (Int. Cl.5)**<br><br>G 01 T |

Der vorliegende Recherchenhericht wurde für alle Patentansprüche erstellt

| Recherchenort | Abschlußdatum der Recherche | Prüfer |
|---|---|---|
| DEN HAAG | 31-10-1991 | DATTA S. |